# DEMANDE DE BREVET EUROPEEN

(11) **EP 4 755 764 A1**
(43) Date de publication de la demande: **10.06.2026**
(21) Numéro de dépôt: 25218269.6
(22) Date de dépôt: 25.11.2025
(51) Int. Cl.: B62D 25/08, B60K 15/067

(54) **COMPARTIMENT ARRIÈRE DE VÉHICULE AUTOMOBILE MUNI D'UN RENFORT DE FIXATION DE RÉSERVOIR DE CARBURANT ET VÉHICULE COMPRENANT UN TEL COMPARTIMENT**

(30) Priorité: 04.12.2024 FR 2413412
(71) Demandeur: Renault s.a.s, 92100 Boulogne Billancourt (FR)
(72) Inventeur: ANDRADE, Mariana, 83070-900 SAO JOSE DOS PINHAIS (BR); BUCATARIU, Florin-Cristian, 062203 BUCAREST (RO); ELIAS, Roberta, 83070-900 SAN JOSE DOS PINHAIS (BR); SOICAN, Liviu, 062203 BUCAREST (RO)

(57) **Abrégé**

Compartiment arrière de véhicule automobile, délimité par un longeron arrière droit (2a), un longeron arrière gauche (2b), une traverse centrale (3), une traverse arrière (4) et la face inférieure d'un plancher arrière (5a), comprenant :
a. une plaque de renfort de siège (10) disposée en regard de la face supérieure du plancher arrière (5a), la plaque de renfort de siège (10) et le plancher arrière (5a) étant conçus de sorte à former un corps creux (C1,C2) s'étendant de part et d'autre d'un plan médian du véhicule automobile,
b. une traverse de renfort (6,6a,6b) de crochet de ceinture de sécurité de siège s'étendant du longeron arrière droit (2b) au longeron arrière gauche (2b), et
c. au moins une plaque de renfort de réservoir (7) reliant le plancher arrière (5a), la traverse arrière (4) et la traverse de renfort (6,6a,6b) de crochet de ceinture de sécurité de siège et disposée sous le corps creux formé par la plaque de renfort de siège (10) et le plancher arrière (5a).

## Description

### Domaine technique

L'invention a pour domaine technique la conception d'une plateforme automobile, et plus particulièrement, la conception des éléments du compartiment arrière d'un véhicule automobile.

### Techniques antérieures

Avec le développement de nouvelles plateformes, tant pour les véhicules électriques que thermiques, de nouvelles architectures peuvent être développées, notamment au niveau du châssis du véhicule.

En modifiant un nombre restreint d'éléments, un même châssis peut être partagé entre des véhicules pour le transport de passagers et des véhicules utilitaires.

Actuellement, les utilisateurs finaux sont particulièrement attentifs à l'espace disponible aux places arrière. Le développement de nouveaux châssis coïncide idéalement avec la prise en charge de ces nouvelles attentes, en augmentant la place disponible aux places arrière sur l'ensemble des types de véhicules.

Néanmoins, ces changements ont eu pour effet la création de points de rupture en partie arrière du véhicule, notamment au niveau de la fixation du réservoir de carburant.

Il a été déterminé que ces points de rupture découlaient d'importantes déformations locales résultant de l'implémentation de ces changements dues notamment à la fixation du réservoir au plancher arrière.

Comme la plateforme est nouvelle, il n'existe pas de solution dans l'état de la technique qui puisse être appliqué.

### Exposé de l'invention

L'invention a pour objet un compartiment arrière de véhicule automobile, délimité par un longeron arrière droit, un longeron arrière gauche, une traverse centrale, une traverse arrière et la face inférieure d'un plancher arrière, comprenant :
a. une plaque de renfort de siège disposée en regard de la face supérieure du plancher arrière, la plaque de renfort de siège et le plancher arrière étant conçus de sorte à former un corps creux s'étendant de part et d'autre d'un plan médian du véhicule automobile,
b. une traverse de renfort de crochet de ceinture de sécurité de siège s'étendant du longeron arrière droit au longeron arrière gauche, et
c. au moins une plaque de renfort de réservoir reliant le plancher arrière, la traverse arrière et la traverse de renfort de crochet de ceinture de sécurité de siège et disposée sous le corps creux formé par la plaque de renfort de siège et le plancher arrière.

Le corps creux peut être formé par une partie centrale du plancher arrière et une partie centrale de la plaque de renfort de siège en regard l'une de l'autre, la partie centrale étant comprise dans une zone intermédiaire du plancher arrière, de sorte à être plus proche de la partie centrale de la plaque de renfort de siège que la zone intermédiaire n'est proche de ladite partie centrale de la plaque de renfort de siège.

Le compartiment arrière de véhicule automobile peut comprendre une seule plaque de renfort de réservoir sur laquelle est fixé un support de fixation en forme de pontet.

Le compartiment arrière de véhicule automobile peut comprendre deux plaques de renfort de réservoir sur chacune desquelles est fixée une bretelle de maintien.

Un autre objet de l'invention est un véhicule automobile, comprenant un compartiment arrière tel que décrit ci-dessus et un réservoir de carburant fixé au plancher arrière par l'intermédiaire de la au moins une plaque de renfort de réservoir.

Lorsque le véhicule automobile décrit ci-dessus comprend une transmission de type 4x2, le réservoir de carburant peut être fixé au plancher arrière par l'intermédiaire de l'unique plaque de renfort de réservoir et du support de fixation en forme de pontet.

Lorsque le véhicule automobile décrit ci-dessus comprend une transmission de type 4x4, le réservoir de carburant peut être fixé au plancher arrière par l'intermédiaire par l'intermédiaire des deux plaques de renfort de réservoir et des bretelles de maintien.

### Brève description des dessins

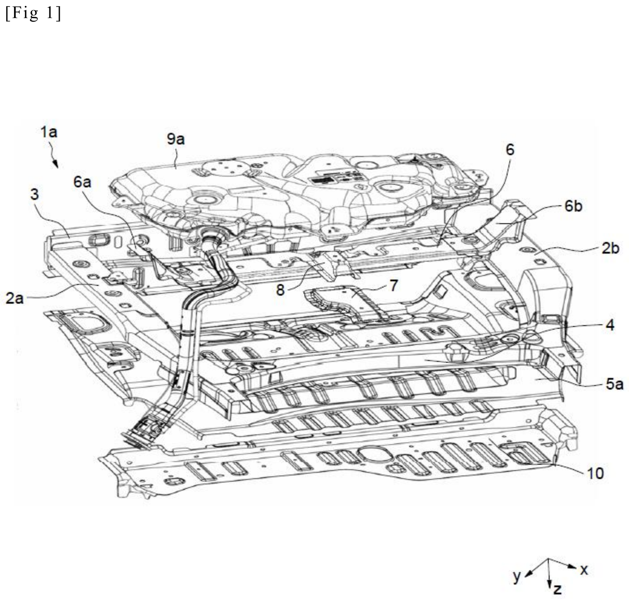

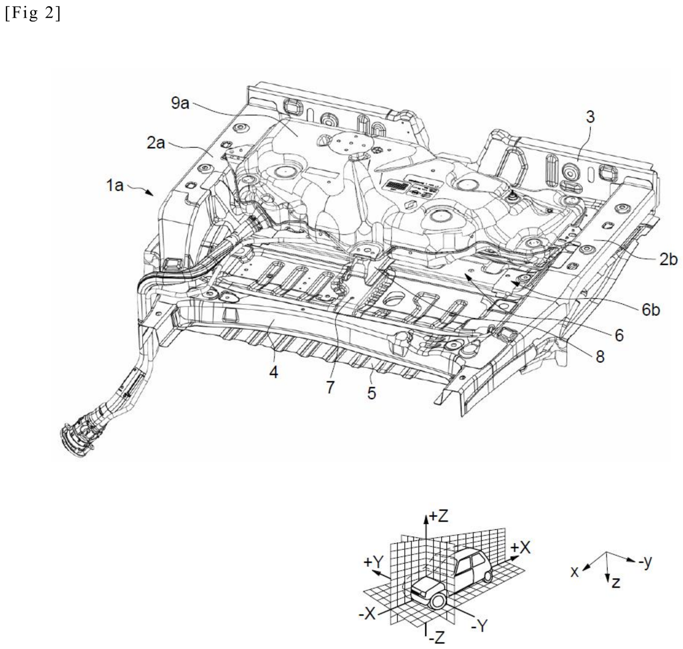

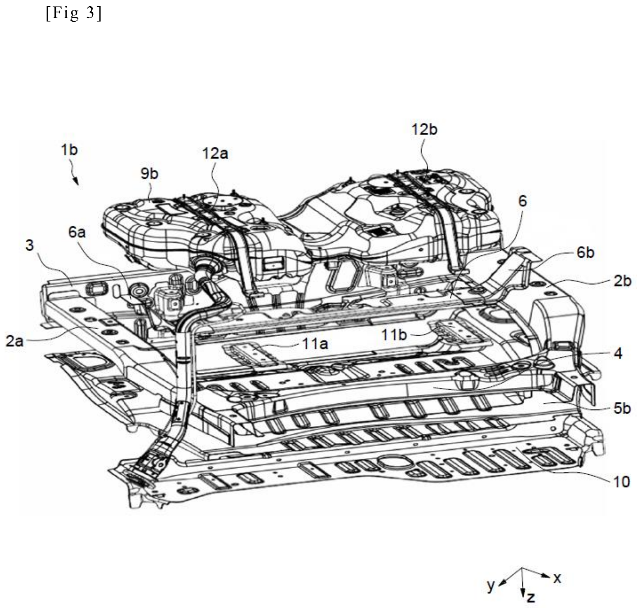

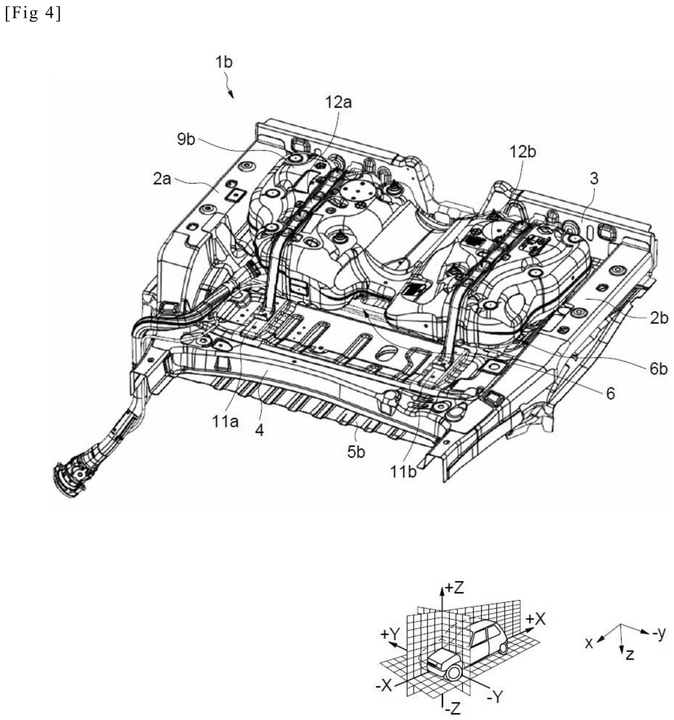

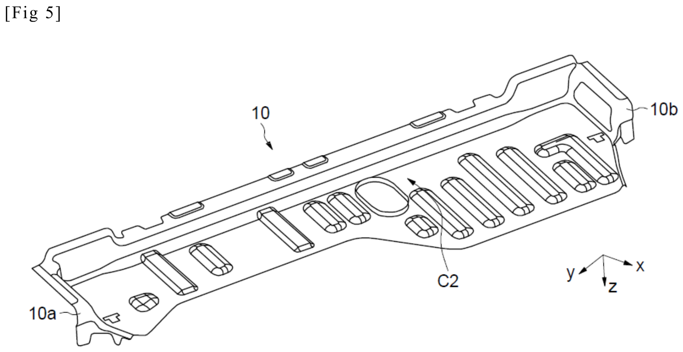

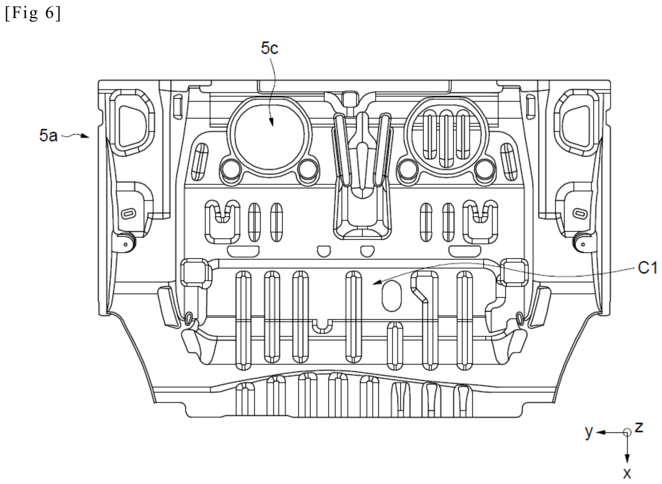

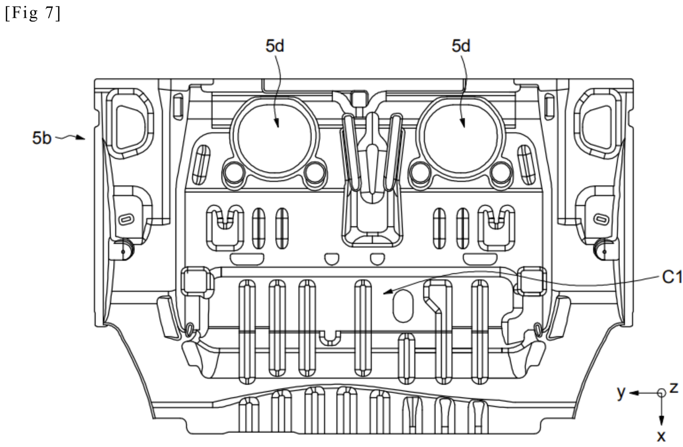

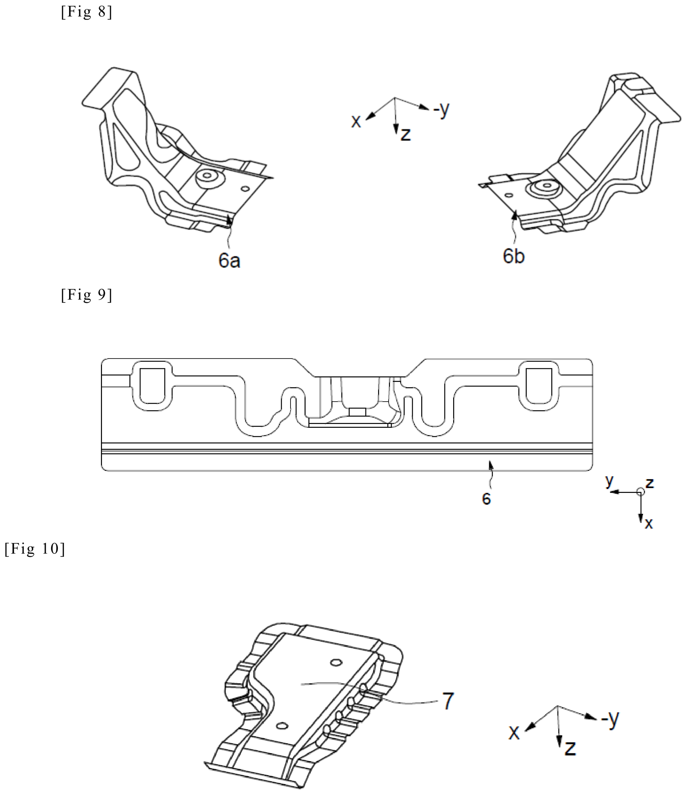

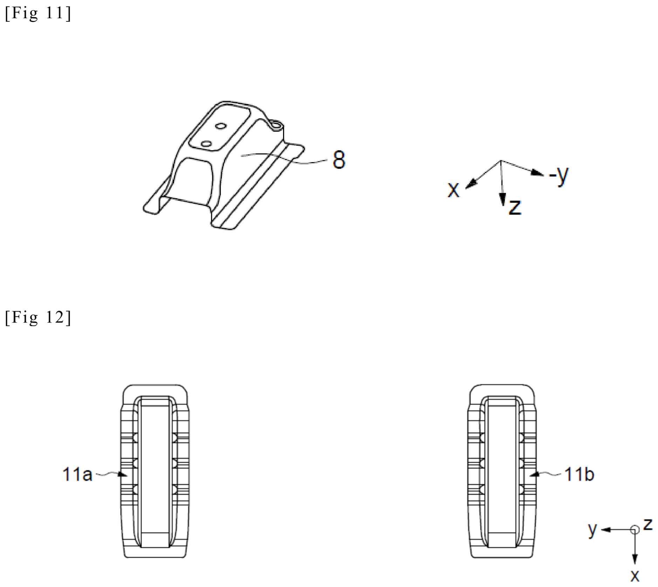

D'autres buts, caractéristiques et avantages de l'invention apparaîtront à la lecture de la description suivante, donnée uniquement à titre d'exemple non limitatif et faite en référence aux dessins annexés sur lesquels :
- la figure [Fig 1] et la figure [Fig 2] illustrent un véhicule automobile de type 4x2 muni d'un compartiment arrière selon l'invention,
- la figure [Fig 3] et la figure [Fig 4] illustrent un véhicule automobile de type 4x4 muni d'un compartiment arrière selon l'invention,
- la figure [Fig 5] illustre une plaque de renfort de siège,
- la figure [Fig 6] illustre un plancher arrière d'un compartiment arrière pour un véhicule automobile de type 4x2,
- la figure [Fig 7] illustre un plancher arrière d'un compartiment arrière pour un véhicule automobile de type 4x4,
- la figure [Fig 8] et la figure [Fig 9] illustrent différentes parties de la traverse de renfort de crochet de ceinture de sécurité de siège d'un compartiment arrière pour un véhicule automobile,
- la figure [Fig 10] illustre une plaque de renfort de réservoir d'un compartiment arrière pour un véhicule automobile,
- la figure [Fig 11] illustre un support de fixation en forme de pontet d'un compartiment arrière pour un véhicule automobile, et
- la figure [Fig 12] illustre deux plaques de renfort d'un compartiment arrière pour un véhicule automobile.

### Description détaillée

Afin de résoudre le problème technique lié à l'apparition de points de rupture du fait de la fixation du réservoir de carburant au plancher arrière, un nouveau compartiment arrière de châssis automobile a été conçu.

Le nouveau compartiment arrière comprend deux modes de réalisation différant l'un de l'autre de par son utilisation pour la réalisation de véhicules présentant des modes différents de transmission de la puissance motrice aux roues.

Le premier mode de réalisation concerne un compartiment arrière pour un véhicule à transmission de type 4x2, dans laquelle la puissance motrice est transmise aux roues d'un essieu, avant ou arrière. Le premier mode de réalisation est illustré par les figures 1 et 2, respectivement en vue plongeante éclatée et en vue plongeante du dessous du véhicule.

Le deuxième mode de réalisation concerne un compartiment arrière pour un véhicule à transmission de type 4x4, dans laquelle la puissance motrice est transmise aux quatre roues, chaque roue étant indépendante. Dans ce type de transmission, les essieux avant et arrière sont munis chacun d'un différentiel permettant la rotation d'une roue alors que l'autre est bloquée, les différentiels étant reliés par une transmission plus imposante qu'une transmission de véhicule 4x2 propulsé par le train arrière. Une telle transmission 4x4 nécessite des aménagements au niveau du châssis afin de ménager un tunnel de transmission conséquent. Un véhicule 4x4 est également employé dans des situations de franchissement, pouvant provoquer plus de chocs et de vibrations que pour un véhicule 4x2. Cela implique notamment d'améliorer la sécurisation du réservoir de carburant. Le deuxième mode de réalisation est illustré par les figures 3 et 4, respectivement en vue plongeante éclatée et en vue plongeante du dessous du véhicule.

Dans les deux modes de réalisation, le nouveau compartiment arrière 1a,1b est délimité par un longeron arrière droit 2a, un longeron arrière gauche 2b, une traverse centrale 3, une traverse arrière 4 et la face inférieure du plancher arrière 5a,5b.

On notera que les sièges arrière du véhicule sont fixés à la face supérieure du plancher arrière par l'intermédiaire d'une plaque de renfort de siège 10.

La figure 5 illustre la plaque de renfort de siège 10 tandis que les figures 6 et 7 illustrent le plancher arrière 5a,5b selon chacun des deux modes de réalisation.

La figure 6 illustre une vue normale du plancher arrière 5a selon le premier mode de réalisation. On note qu'il comprend une ouverture 5c pour une trappe de visite du réservoir de carburant 9a. Le plancher arrière 5a,5b présente une zone intermédiaire et une partie centrale C1 plus proche de la plaque de renfort de siège 10 que la zone intermédiaire de sorte à rigidifier le plancher arrière 5a,5b.

On notera que le plancher arrière 5a,5b et la plaque de renfort de siège 10 présentent des formes complémentaires, référencées respectivement C1 et C2, de sorte que leur assemblage forme un corps creux C1, C2, qui augmente la rigidité du plancher arrière 5a,5b. Plus précisément, le plancher arrière 5a,5b et la plaque de renfort de siège 10 s'étendent du longeron arrière droit 2a au longeron arrière gauche 2b. La face inférieure du plancher arrière 5a,5b comprend des zones d'appui au contact des longerons 2a,2b tandis que la plaque de renfort de siège 10 est disposée au contact de la face supérieure des appuis du plancher arrière 5a,5b par l'intermédiaire de ses propres appuis.

Le plancher arrière 5a,5b comprend une zone intermédiaire entre les zones d'appuis sur les longerons 2a,2b à un niveau verticalement plus haut que les appuis. On définit un repère orthonormé (O,X,Y,Z), dans lequel la direction X (1,0,0) est dirigée vers l'arrière du véhicule, la direction Y(0,1,0) est dirigée vers la droite du véhicule, et la direction Z(0,0,1) est dirigée vers le haut du véhicule. Dans un tel repère, on comprend que la cote selon la direction Z de la zone intermédiaire est plus grande que la cote selon cette même direction Z des appuis.

Dans cette zone intermédiaire est prévue une partie centrale C1 présentant une cote selon la direction Z plus grande que la cote selon cette même direction Z de la zone intermédiaire. La centrale partie C1 ne présente toutefois pas de contact avec la partie centrale C2 de la plaque de renfort de siège 10.

La plaque de renfort de siège 10 comprend des zones d'appui 10a,10b et repose par celles-ci sur le plancher arrière 5a,5b à l'aplomb des longerons 2a,2b. La plaque de renfort de siège 10 présente une surface sensiblement plane en partie centrale C2 présentant un décalage vertical avec la surface opposée du plancher arrière 5a,5b, de sorte à former le corps creux avec le plancher arrière 5a,5b.

La rigidité de l'ensemble est encore améliorée par la présence de bossages sur chacune de ces pièces.

Le compartiment arrière 1a est muni d'une traverse de renfort 6,6a,6b de crochet de ceinture de sécurité de siège s'étendant du longeron arrière droit 2a au longeron arrière gauche 2b en étant au contact du plancher arrière 5a. La figure 8 et la figure 9 illustrent différentes parties de la traverse de renfort 6,6a,6b de crochet de ceinture de sécurité de siège. La figure 8 illustre le montant d'extrémité droit 6a, et le montant d'extrémité gauche 6b, disposés chacun à une extrémité d'une partie centrale 6 de la traverse de renfort 6,6a,6b de crochet de ceinture de sécurité de siège, illustrée par la figure 9.

Dans le premier mode de réalisation, le compartiment arrière 1a est muni d'une plaque de renfort de réservoir 7 et d'un support de fixation 8 en forme de pontet.

La plaque de renfort de réservoir 7 relie le plancher arrière 5a, la traverse arrière 4 et la traverse de renfort 6,6a,6b de crochet de ceinture de sécurité de siège. Elle est disposée en regard de la zone de rigidité augmentée du fait du corps creux formé par la plaque de renfort de siège 10 et le plancher arrière 5a,5b.

Le support de fixation 8 en forme de pontet est fixé sur la plaque de renfort de réservoir 7 et la traverse de renfort 6,6a,6b de crochet de ceinture de sécurité de siège. Le réservoir de carburant 9a est fixé sur le plancher arrière 5a et sur le support de fixation 8 en forme de pontet.

La figure 10 illustre la plaque de renfort de réservoir 7 et la figure 11 le support de fixation 8 en forme de pontet.

Dans le deuxième mode de réalisation, le compartiment arrière 1b est muni de deux plaques de renfort 11a,11b et de deux bretelles de maintien encerclant partiellement le réservoir de carburant 9b dans la direction longitudinale par rapport au véhicule.

La figure 12 illustre les deux plaques de renfort 11a,11b, reliant le plancher arrière 5a,5b, la traverse arrière 4 et la traverse de renfort 6,6a,6b de crochet de ceinture de sécurité de siège. La plaque de renfort droite 11a est disposée sensiblement à égale distance du longeron droit 2a et du plan médian du véhicule et en regard de la zone de rigidité augmentée du fait du corps creux formé par la plaque de renfort de siège 10 et le plancher arrière 5a,5b. De manière similaire, la plaque de renfort gauche 11b est disposée sensiblement à égale distance du longeron gauche 2b et du plan médian du véhicule. La plaque de renfort gauche 11b est également disposée sensiblement en regard de la zone de rigidité augmentée du fait du corps creux formé par la plaque de renfort de siège 10 et le plancher arrière 5a,5b.

En se référant à nouveau aux figures 3 et 4, on note qu'une bretelle de maintien droite 12a est fixée à la plaque de renfort droite 11a et à un premier point de fixation sur le réservoir de carburant. De manière similaire, une bretelle de maintien gauche 12b est fixée à la plaque de renfort gauche 11b et à un deuxième point de fixation sur le réservoir de carburant.

La figure 7 illustre le plancher arrière 5b selon le deuxième mode de réalisation vu de dessus. Le plancher arrière 5b selon le deuxième mode de réalisation diffère du plancher arrière 5a selon le premier mode de réalisation par la présence de deux ouvertures 5d en regard du réservoir d'essence 9b au lieu d'une seule ouverture 5d dans le premier mode de réalisation. Les deux ouvertures 5d permettent d'accommoder deux trappes de visite, rendues nécessaires du fait de la forme du réservoir 9b dans le deuxième mode de réalisation. En effet, la partie centrale du réservoir en face inférieure forme une arche de sorte à pouvoir coopérer avec la transmission entre les différentiels avant et arrière du véhicule 4x4.

Du fait de la présence de cette arche, le réservoir de carburant comprend deux points bas auxquels il peut être nécessaire d'accéder pour des opérations de maintenance du réservoir. Il est alors nécessaire de disposer de deux trappes de visite distinctes.

## Revendications

1. Compartiment arrière de véhicule automobile, délimité par un longeron arrière droit (2a), un longeron arrière gauche (2b), une traverse centrale (3), une traverse arrière (4) et la face inférieure d'un plancher arrière (5a,5b), **caractérisé par le fait qu'**il comprend :
a. une plaque de renfort de siège (10) disposée en regard de la face supérieure du plancher arrière (5a,5b), la plaque de renfort de siège (10) et le plancher arrière (5a,5b) étant conçus de sorte à former un corps creux (C1,C2) s'étendant de part et d'autre d'un plan médian du véhicule automobile,
b. une traverse de renfort (6,6a,6b) de crochet de ceinture de sécurité de siège s'étendant du longeron arrière droit (2b) au longeron arrière gauche (2b), et
c. au moins une plaque de renfort de réservoir (7,11a,11b) reliant le plancher arrière (5a), la traverse arrière (4) et la traverse de renfort (6,6a,6b) de crochet de ceinture de sécurité de siège et disposée sous le corps creux formé par la plaque de renfort de siège (10) et le plancher arrière (5a,5b).

2. Compartiment arrière de véhicule automobile selon la revendication 1, dans lequel le corps creux (C1,C2) est formé par une partie centrale (C1) du plancher arrière et une partie centrale (C2) de la plaque de renfort de siège (10) en regard l'une de l'autre, la partie centrale (C1) étant comprise dans une zone intermédiaire du plancher arrière (5a,5b), de sorte à être plus proche de la partie centrale (C2) de la plaque de renfort de siège (10) que la zone intermédiaire n'est proche de ladite partie centrale (C2) de la plaque de renfort de siège (10).

3. Compartiment arrière de véhicule automobile selon la revendication 1 ou 2, comprenant une seule plaque de renfort de réservoir (7) sur laquelle est fixée un support de fixation (8) en forme de pontet.

4. Compartiment arrière de véhicule automobile selon la revendication 1 ou 2, comprenant deux plaques de renfort de réservoir (11a,11b) sur chacune desquelles est fixée une bretelle de maintien (12a,12b).

5. Véhicule automobile, comprenant un compartiment arrière selon l'une quelconque des revendications 1 à 4 et un réservoir de carburant (9a,9b), dans lequel le réservoir de carburant (9a,9b) est fixé au plancher arrière (5a,5b) par l'intermédiaire de l'au moins une plaque de renfort de réservoir (7,11a,11b).

6. Véhicule automobile comprenant un compartiment arrière selon la revendication 3, un réservoir de carburant (9a) et une transmission de type 4x2, dans lequel le réservoir de carburant est fixé au plancher arrière (5a) par l'intermédiaire de l'unique plaque de renfort de réservoir (7) et du support de fixation (8) en forme de pontet.

7. Véhicule automobile comprenant un compartiment arrière selon la revendication 4, un réservoir de carburant (9b) et une transmission de type 4x4, dans lequel le réservoir de carburant est fixé au plancher arrière (5b) par l'intermédiaire des deux plaques de renfort de réservoir (11a,11b) et des bretelles de maintien (12a,12b).
